# EUROPEAN PATENT APPLICATION

(11) **EP 2 587 344 A1**
(43) Date of publication of application: **01.05.2013**
(21) Application number: 11192284.5
(22) Date of filing: 07.12.2011
(51) Int. Cl.: G06F 3/01

(54) **Haptic feedback module**

(30) Priority: 24.10.2011 TW 100138414
(71) Applicant: Chief Land Electronic Co. Ltd., Wugu Dist., New Taipei City 248 (TW)
(72) Inventor: Chuang, Tsi-Yu, 52142 Changhua County (TW); Ching, Chia-Nan, 32097 Zhongli City, Taoyuan County (TW)
(74) Representative: Karakatsanis, Georgios

(57) **Abstract**

The present invention is directed to a haptic feedback module, which includes a vibration plate, and at least one first actuator that is disposed along a lateral surface of the perimeter of the vibration plate. The vibration plate makes contact with a top plate member. When the first actuator presses the vibration plate, the vibration energy of the vibration plate is transferred to the top plate member to result in haptic feedback.

## Description

### BACKGROUND OF THE INVENTION

### 1. FIELD OF THE INVENTION

The present invention generally relates to an actuator, and more particularly to a screen haptic feedback module.

### 2. DESCRIPTION OF RELATED ART

An actuator is an energy conversion device that, for example, converts electrical energy to mechanical energy, and the converted mechanical energy then further generates acoustic waves or haptic feedback. The actuator is commonly implemented by a smart material such as piezoelectric material, electroactive polymer (EAP), shape memory alloy (SMA), magnetostrictive material or electrostrictive material.

The actuator of a conventional haptic feedback module is usually disposed on a bottom surface of a vibration plate (e.g., a touch screen). When the actuator is driven, it converts electrical energy to mechanical energy, and the converted mechanical energy then acts on the touch screen to result in vibration, which further generates haptic feedback. However, the conventional haptic feedback module generates only unidirectional vibration perpendicular to the vibration plate. Therefore, application prospect of the haptic feedback module cannot be substantively expanded.

Therefore, a need has arisen to propose a novel haptic feedback module to improve the disadvantages mentioned above.

### SUMMARY OF THE INVENTION

In view of the foregoing, the embodiment of the present invention provides a multi-directional haptic feedback module, which generates lateral, longitudinal, slant, rotational or perpendicular haptic feedback in shift or vibration, therefore diversifying applications in haptic feedback.

According to one embodiment, a haptic feedback module includes a vibration plate and at least one first actuator disposed along a lateral surface of circumference of the vibration plate. According to another embedment, the haptic feedback module further includes at least one second actuator disposed along a longitudinal surface of the circumference of the vibration plate. According to a further embodiment, the haptic feedback module further includes at least one third actuator disposed below a bottom surface of the vibration plate.

### BRIEF DESCRIPTION OF THE DRAWINGS

FIG. 1 shows an exploded view of components of a mobile electronic device including a haptic feedback module according to a first embodiment of the present invention;
FIG. 2A and FIG. 2B show perspective views of the first embodiment (FIG. 1);
FIG. 3A and FIG. 3B show a cross-sectional view and a perspective view, respectively, of an assembled haptic feedback module;
FIG. 4 shows a perspective view of an assembled haptic feedback module according to the first embodiment;
FIG. 5A shows an exploded view of components of a haptic feedback module according to a second embodiment of the present invention;
FIG. 5B shows a perspective view of an assembled haptic feedback module of FIG. 5A;
FIG. 6A shows an exploded view of a haptic feedback module according to the second embodiment;
FIG. 6B shows a perspective view of another haptic feedback module according to the second embodiment;
FIG. 7A shows an exploded view of components of a haptic feedback module according to a third embodiment of the present invention;
FIG. 7B shows a perspective view of an assembled haptic feedback module of FIG. 7A;
FIG. 8A to FIG. 8E show perspective views of haptic feedback modules according to the third embodiment;
FIG. 9 shows an exploded view of components of a mobile electronic device including a haptic feedback module according to a fourth embodiment of the present invention;
FIG. 10A shows a partial perspective top view according to the fourth embodiment;
FIG. 10B shows a partial perspective bottom view according to the fourth embodiment;
FIG. 11 shows an exploded view of components of a haptic feedback module according to a fifth embodiment of the present invention;
FIG. 12A shows a partial perspective top view according to the fifth embedment;
FIG. 12B shows a partial perspective bottom view according to the fifth embodiment;
FIG. 13 shows a perspective bottom view of the third actuator and the inertial mass;
FIG. 14 shows an exploded view of components of a haptic feedback module according to a sixth embodiment of the present invention; and
FIG. 15 shows an exploded view of components of a haptic feedback module according to a seventh embodiment of the present invention.

### DETAILED DESCRIPTION OF THE INVENTION

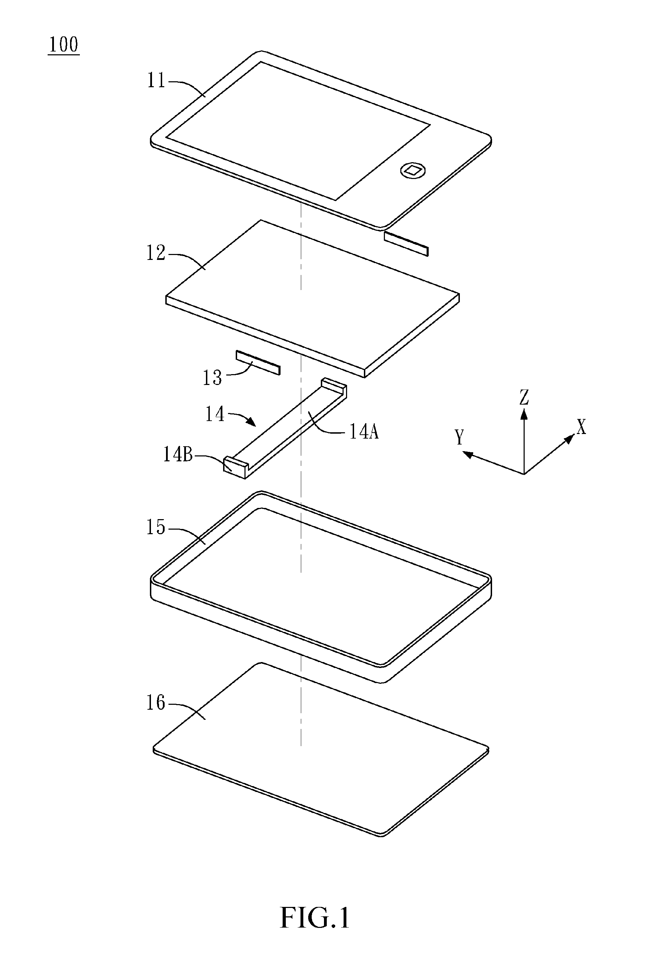

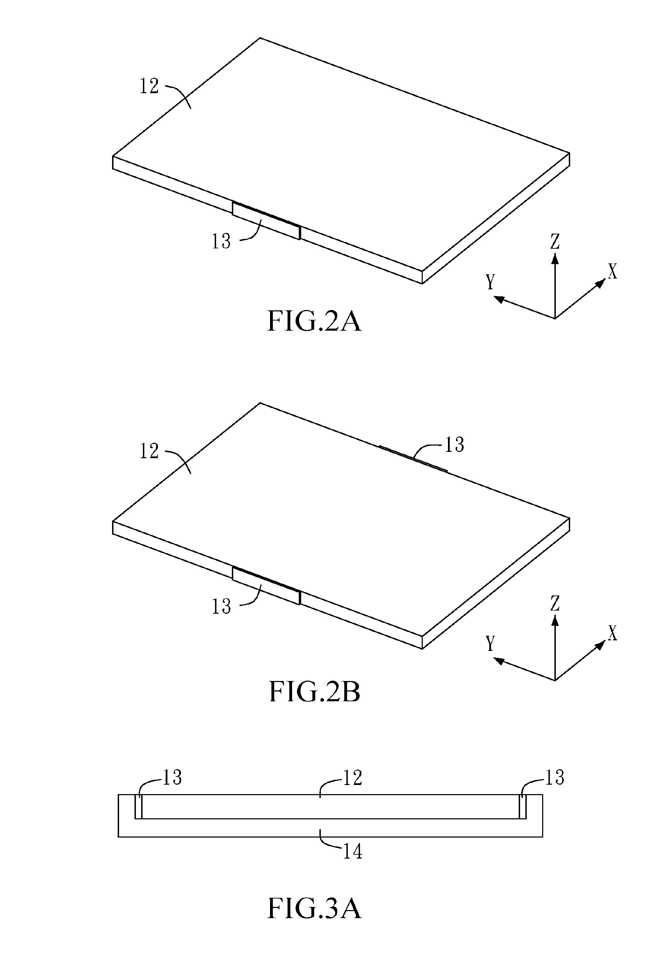

FIG. 1 shows an exploded view of components of a mobile electronic device 100 including a haptic feedback module according to a first embodiment of the present invention. Only components pertinent to the haptic feedback module are shown. The electronic device 100 may be a mobile phone, a smart phone, a personal digital assistant (PDA), a tablet (or slate) computer, an electronic reader (or e-reader), a digital photo frame, a digital camera or a multimedia device. In the embodiment, the electronic device 100 includes, from top to bottom, a top plate member 11, a vibration plate 12, a first actuator 13, a carrier 14, a frame 15 and a bottom housing 16. Specifically, the top plate member 11 may be a cover lens, a touch sensitive module or a scratch-protection layer. Common touch sensitive module is of resistive type, projected capacitive type, infrared type or surface acoustic wave (SAW) type. A high-end smart phone or tablet computer, for example, utilizes projected-capacitive-type touch technique, concerning fluency in touch control operation or support for multi-touch control. The conventional projected-capacitive-type touch control may be implemented by double-sided ITO (DITO), which, however, has a complicated structure and high cost. Recently, more manufacturers adopt the one-glass solution that forms capacitive sensing array directly on the back surface of a protective glass. According to the embodiment, as the top plate member 11 and the vibration plate 12 are coupled together, the vibration energy of the vibration plate 12 is transferred to the top plate member 11 when the first actuator 13 presses the vibration plate 12, therefore making an operator perceive the haptic feedback. In order to generate lateral haptic feedback effect, at least one first actuator 13 is directly or indirectly disposed along a lateral surface of the circumference of the vibration plate 12 as shown in FIG. 2A. In other words, the first actuator 13 may physically contact the lateral surface of the vibration plate 12, or may be neighboring the lateral surface of the vibration plate 12. As exemplified in FIG. 2B, two said first actuators 13 are disposed along two opposite lateral surfaces of the vibration plate 12. Accordingly, when the electronic device 100 is operated, the first actuator 13 is driven to convert electrical energy to mechanical energy, which exerts lateral (e.g., direction X as shown) force on the vibration plate 12, therefore generating haptic feedback in shift or vibration. For example, the haptic feedback module provides corresponding haptic feedback according to scene or sound in a game played in the electronic device 100. More than one of the first actuator 13 may be disposed along one or two surfaces perpendicular to a direction (e.g., direction X or Y as shown) to enhance haptic feedback along that direction. The first actuator 13 may be coupled to the vibration plate 12, for example, by contacting, binding, inlaying, embedding, screwing or integrating.

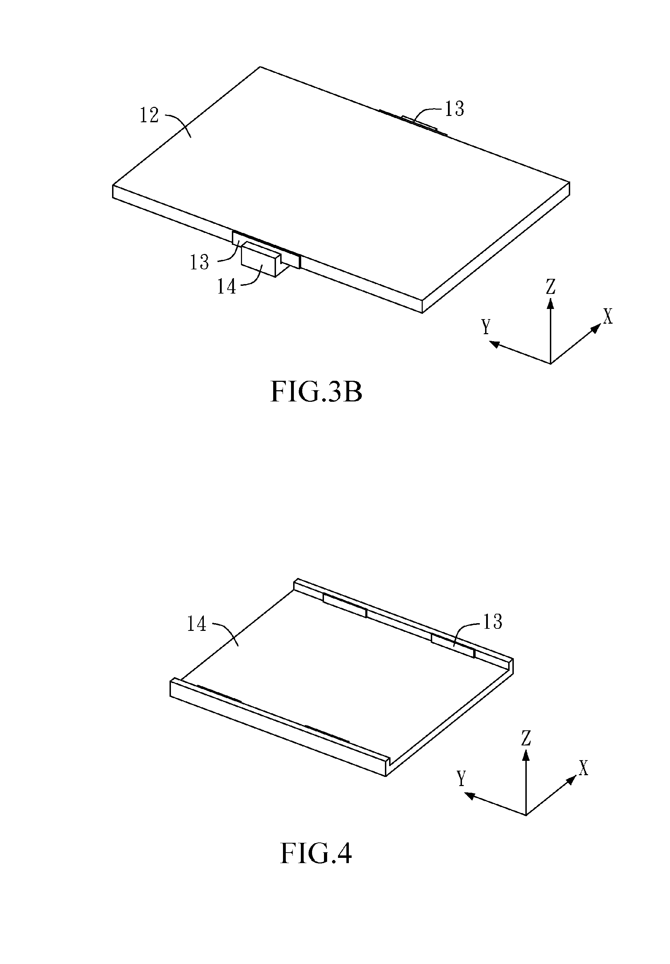

In the embodiment, the carrier 14 is selectively used to support the vibration plate 12 such that the first actuator 13 is clamped between the carrier 14 and the vibration plate 12. The carrier 14 primarily includes a base 14A and side fixing members 14B perpendicularly extended from the base 14A. The length of the side fixing member 14B may be dependent on the amount of the first actuators 13. The side fixing member 14B may include a number of unconnected sub-members for fixing the first actuators 13 respectively. The side fixing members 14B disposed at two sides of the carrier 14 need not have the same structure, which may be dependent on the arrangement of the actuators 13 or the optimization of internal structure of the electronic device 100. FIG. 3A and FIG. 3B show a cross-sectional view and a perspective view, respectively, of an assembled haptic feedback module. The first actuator 13 may be coupled to the carrier 14, for example, by contacting, binding, inlaying, embedding, screwing or integrating.

In the embodiment, the vibration plate 12 may be a liquid crystal display module, an electronic paper (or e-paper) or other display interface. The first actuator 13 may be made of a material or device such as piezoelectric material (e.g., lead zirconate titanate, PZT), electroactive polymer (EAP), shape memory alloy (SMA), magnetostrictive material, a voice coil motor or a linear resonant actuator (LRA).

The amount and respective locations of the first actuators 13 may de dependent on the optimization of internal structure of the electronic device 100. As shown in FIG. 4, a perspective view of an assembled first actuator 13 and carrier 14, two said first actuators 13 are disposed on each of two sides of the vibration plate 12 (not shown).

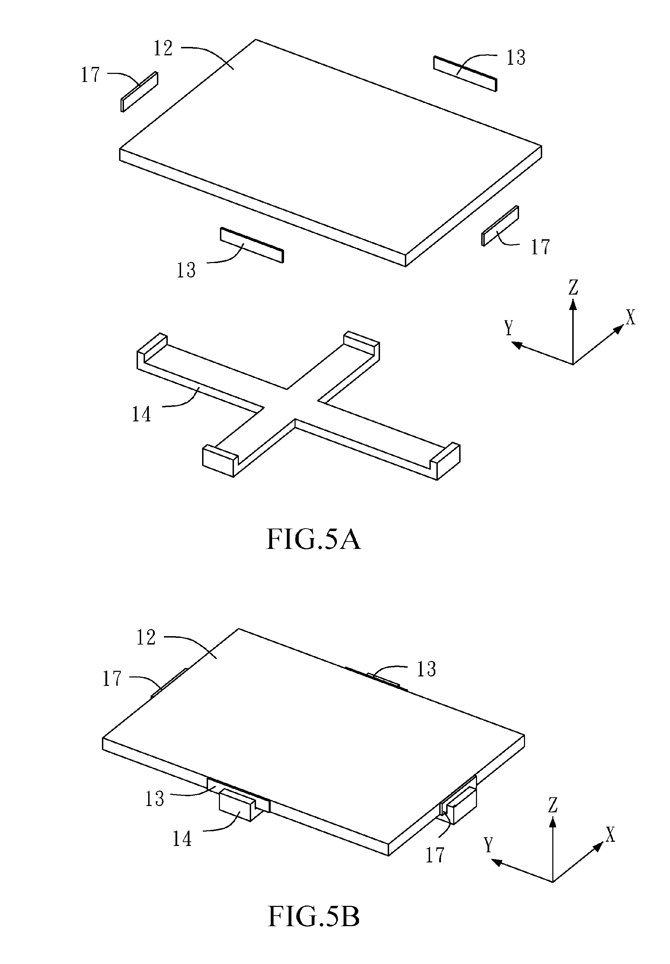

FIG. 5A shows an exploded view of components of a haptic feedback module (while omitting the top plate member 11, the frame 15 and the bottom housing 16) according to a second embodiment of the present invention. FIG. 5B shows a perspective view of an assembled haptic feedback module of FIG. 5A. In the embodiment, in addition to the first actuators 13 disposed along the lateral (e.g., direction X) surfaces of the circumference of the vibration plate 12, at least one second actuator 17 is further disposed along the longitudinal (e.g., direction Y) surfaces of the circumference of the vibration plate 12. Accordingly, when the second actuator 17 is driven to convert electrical energy to mechanical energy, which exerts longitudinal (e.g., direction Y as shown) force on the vibration plate 12, therefore generating haptic feedback in longitudinal shift or vibration. The composing material of the second actuator 17, the connection relationship between the second actuator 17 and the vibration plate 12, and the connection relationship between the second actuator 17 and the carrier 14 are similar to those in the first embodiment, and are thus omitted for brevity. The terms "lateral" and "longitudinal" in the specification refer to directions that are parallel to the vibration plate 12.

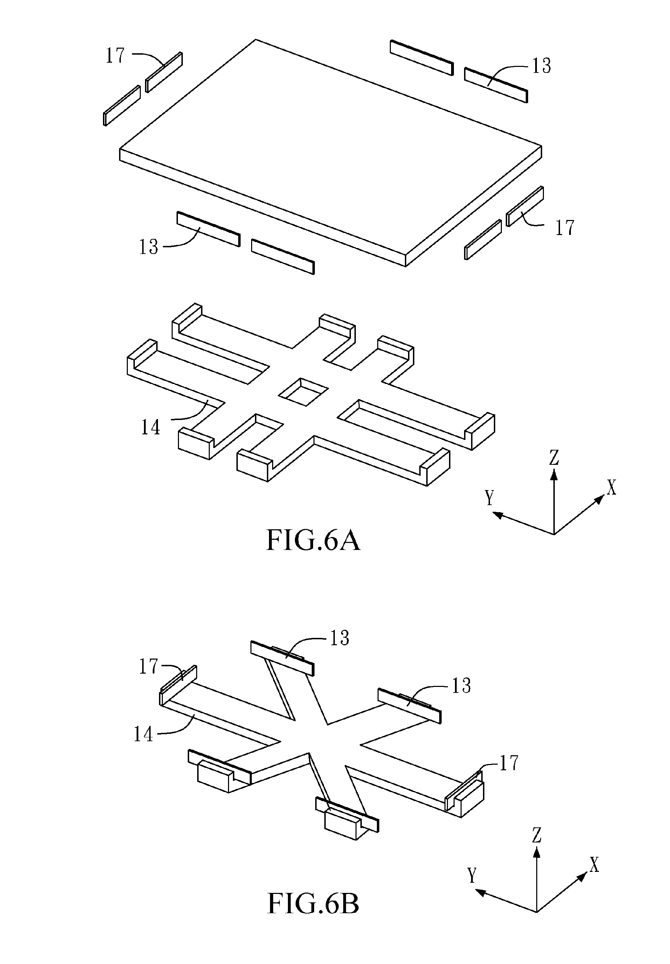

The amount of the second actuators 17 may be adaptively adjusted according to actual applications. As illustrated in an exploded view of a haptic feedback module of FIG. 6A, two said second actuators 17 are disposed on each of two longitudinal sides of the vibration plate 12. FIG. 6B shows a perspective view of another haptic feedback module, in which one said second actuator 17 is disposed on each of two longitudinal sides of the vibration plate 12. In the embodiment, the first actuators 13 or the second actuators 17 may be selectively disposed on one or two lateral/longitudinal sides of the vibration plate 12, respectively. The configuration of the carrier 14 may be dependent on the amount, the size, the respective location or the optimization of internal structure of the electronic device 100, and are not limited to that shown in FIG. 6A or FIG. 6B. According to the embodiment as discussed above, haptic feedback along two directions parallel to the vibration plate 12 may be obtained by driving the first actuator 13 and the second actuator 17 in combination.

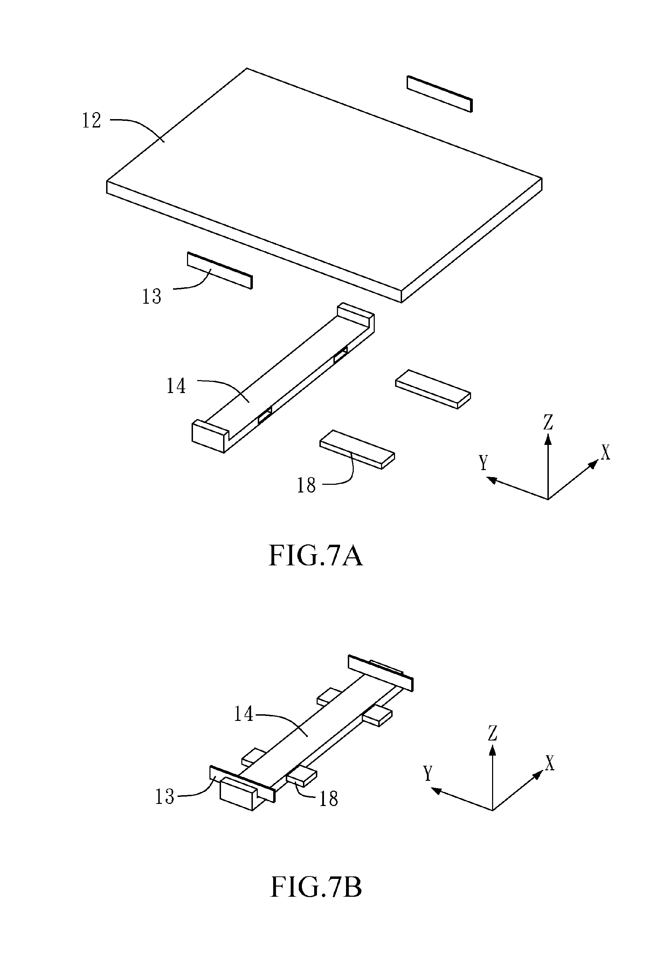

FIG. 7A shows an exploded view of components of a haptic feedback module (while omitting the top plate member 11, the frame 15 and the bottom housing 16) according to a third embodiment of the present invention. FIG. 7B shows a perspective view of an assembled haptic feedback module of FIG. 7A. In the embodiment, in addition to the first actuators 13 disposed, for example, along the lateral surfaces of the circumference of the vibration plate 12, at least one third actuator 18 is further disposed directly or indirectly on a bottom surface of the vibration plate 12. Accordingly, when the third actuator 18 is driven to convert electrical energy to mechanical energy, which exerts perpendicular (e.g., direction Z that is perpendicular to X and Y) force on the vibration plate 12, therefore generating haptic feedback in perpendicular shift or vibration. The composing material of the third actuator 18, the connection relationship between the third actuator 18 and the vibration plate 12, and the connection relationship between the third actuator 18 and the carrier 14 are similar to those in the first embodiment, and are thus omitted for brevity. The term "perpendicular" in the specification refers to direction that is orthogonal to the vibration plate 12. According to the embodiment as discussed above, haptic feedback along one direction parallel to the vibration plate 12 and one direction perpendicular to the vibration plate 12 may be obtained by driving the first actuator 13 and the third actuator 18 in combination.

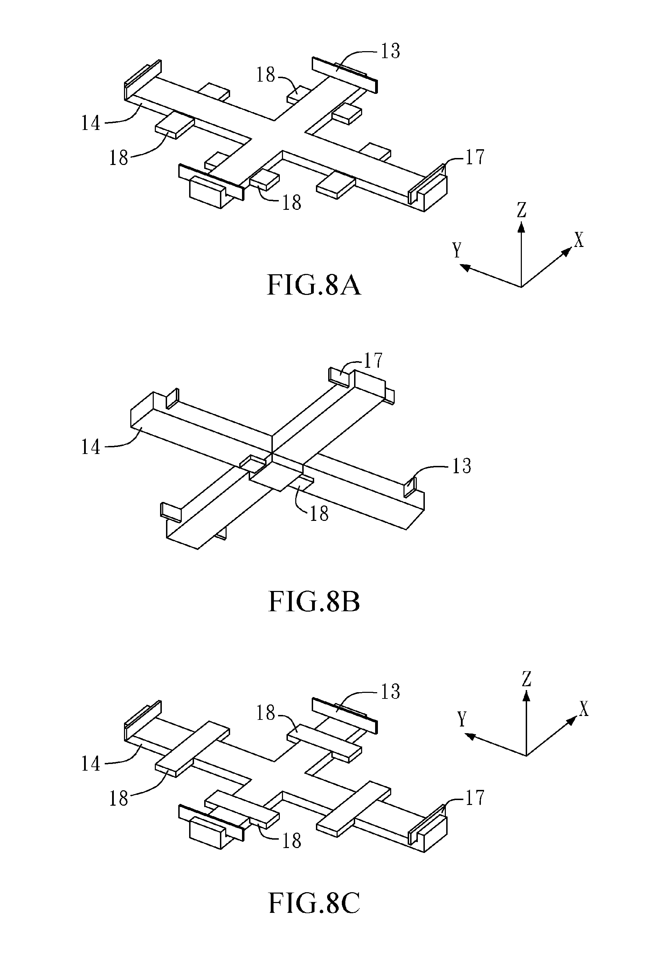

The amount of the third actuators 18 may be adaptively adjusted according to actual applications. As illustrated in a perspective view of an assembled haptic feedback module of FIG. 8A, four said third actuators 18 are disposed on the bottom surface of the vibration plate 12. FIG. 8B shows a perspective view of another haptic feedback module, in which one said third actuator 18 is disposed on the bottom of the carrier 14 (e.g., the bottom center of the carrier 14).

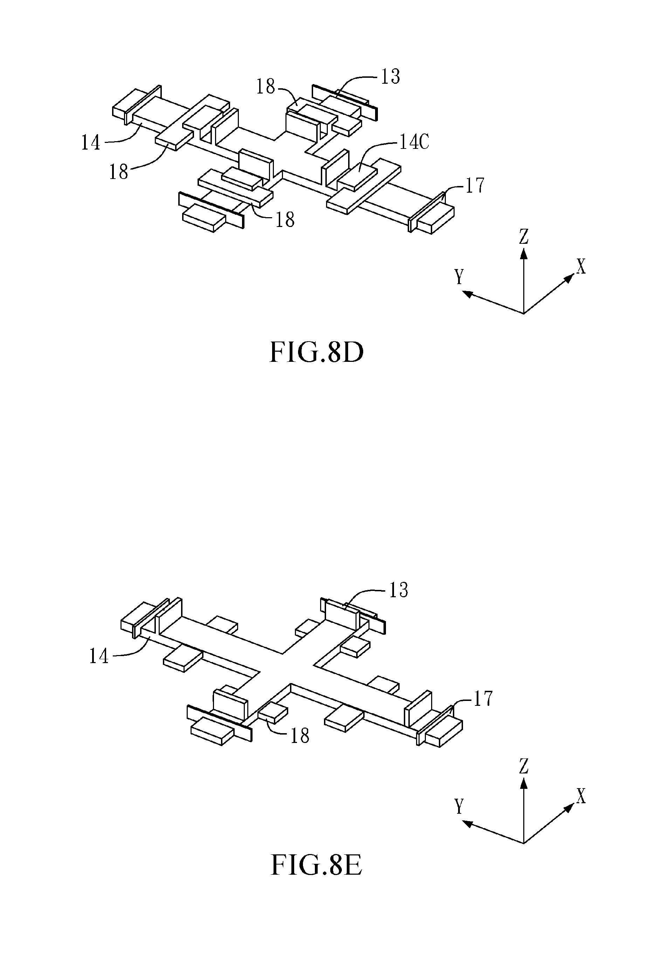

According to the illustrated haptic feedback modules (FIG. 7A/B and FIG. 8A), the third actuator 18 is inserted to an opening of the carrier 14 and is fixed to the carrier 14. Other methods may, however, be adopted. FIG. 8C shows a perspective view of another assembled haptic feedback module, in which the third actuator 18 is inlaid in a groove of the carrier 14. FIG. 8D shows a perspective view of a further assembled haptic feedback module, in which the third actuator 18 is embedded in the carrier 14 by a clamping member 14C. The groove exemplified in FIG. 8C used to inlay the third actuator 18 and the clamping member 14C exemplified in FIG. 8D used to embed the third actuator 18 may be adapted to the first actuator 13 or the second actuator 17 as well.

FIG. 8E further shows a perspective view of an assembled haptic feedback module, in which the first actuators 13 and the second actuators 17 are inlaid in grooves of the carrier 14. The grooves exemplified in FIG. 8E used to inlay the first actuator 13 and the second actuator 17 may be adapted to the third actuator 18 as well.

According to the embodiment as discussed above, haptic feedback along three directions may be obtained by driving the first actuator 13, the second actuator 17 and the third actuator 18 in combination.

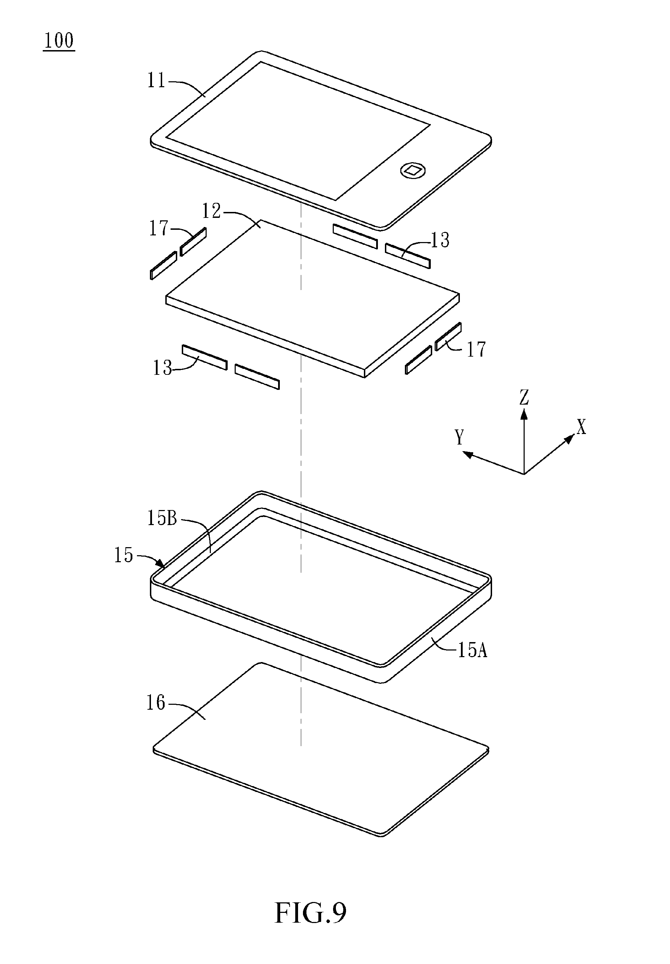

FIG. 9 shows an exploded view of components of a mobile electronic device 100 including a haptic feedback module according to a fourth embodiment of the present invention. Compared to the preceding embodiments, the vibration plate 12 of the present embodiment is placed in the frame 15 rather than supported by the carrier 14. In the embodiment, the frame 15 has an opening. Specifically speaking, the frame 15 includes an outer frame 15A, and an extended portion 15B that is extended from bottom of the outer frame 15A for support the vibration plate 12 and the first/second actuators 13/17. In other words, the extended portion 15B defines the opening. The connection relationship between the first/second actuators 13/17 and the frame 15 may, for example, be contacting, binding, inlaying, embedding, screwing or integrating.

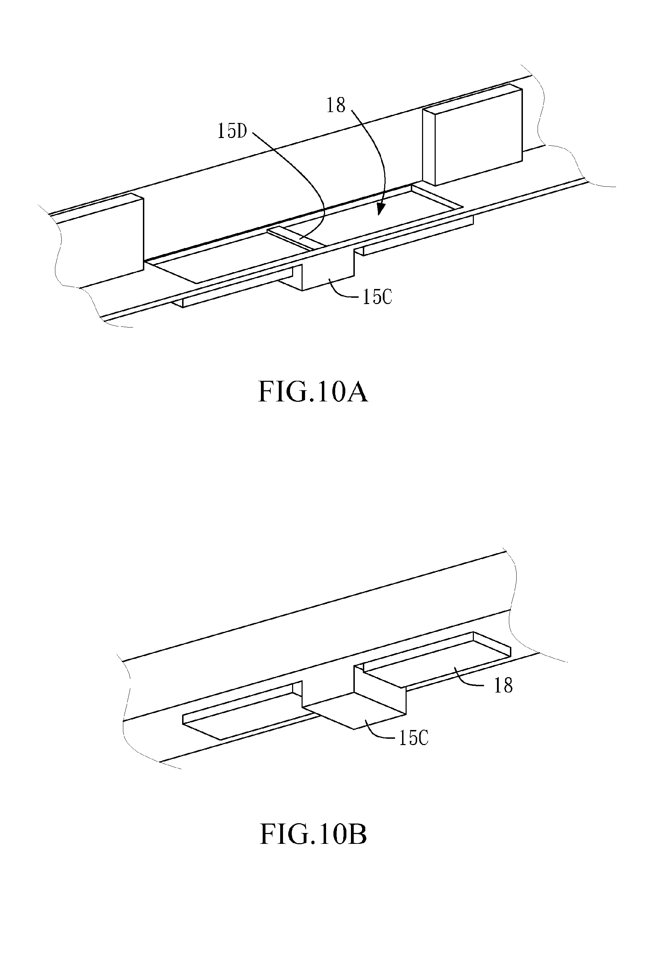

FIG. 10A shows a partial perspective top view of the frame 15, and FIG. 10B shows a partial perspective bottom view of the frame 15. The frame 15 of the embedment may further include a holding groove 15C, arranged in the extended portion 15B, for inlaying the third actuator 18. Moreover, the frame 15 may further include a resistance member 15D disposed above the holding groove 15C. The resistance member 15D may be used to transfer the acoustic energy generated by the third actuator 18 to the vibration plate 12, and also provide a vibration space. Inertial mass may be further arranged on two ends of the third actuator 18 to enhance haptic feedback.

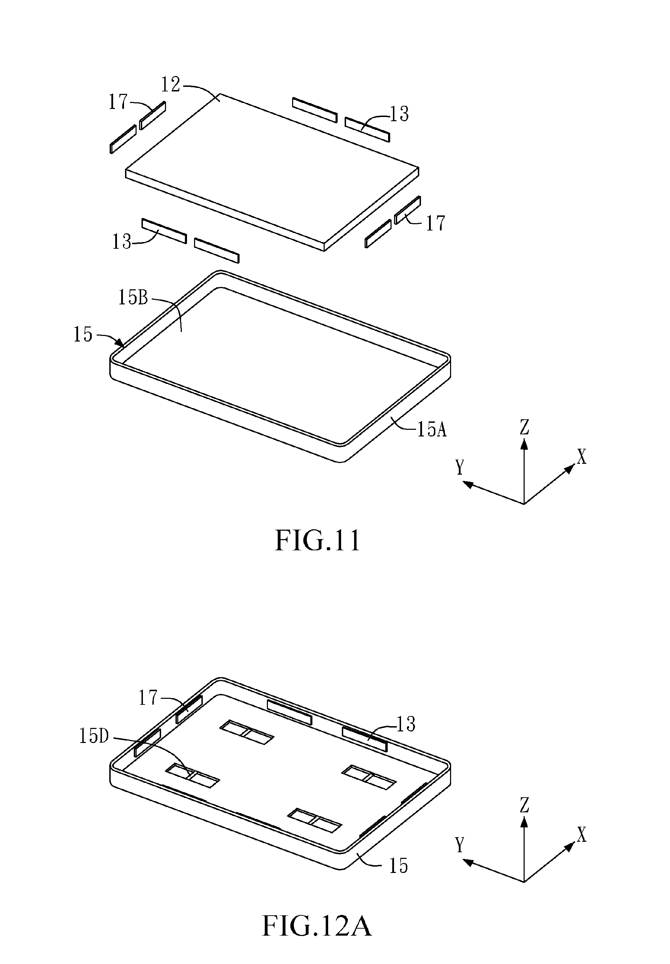

FIG. 11 shows an exploded view of components of a haptic feedback module according to a fifth embodiment of the present invention. Compared to the fourth embodiment (FIG. 9), the frame 15 of the present embodiment is closed without an opening. In other words, the extended portion 15B of the frame 15 of the embodiment does not define an opening.

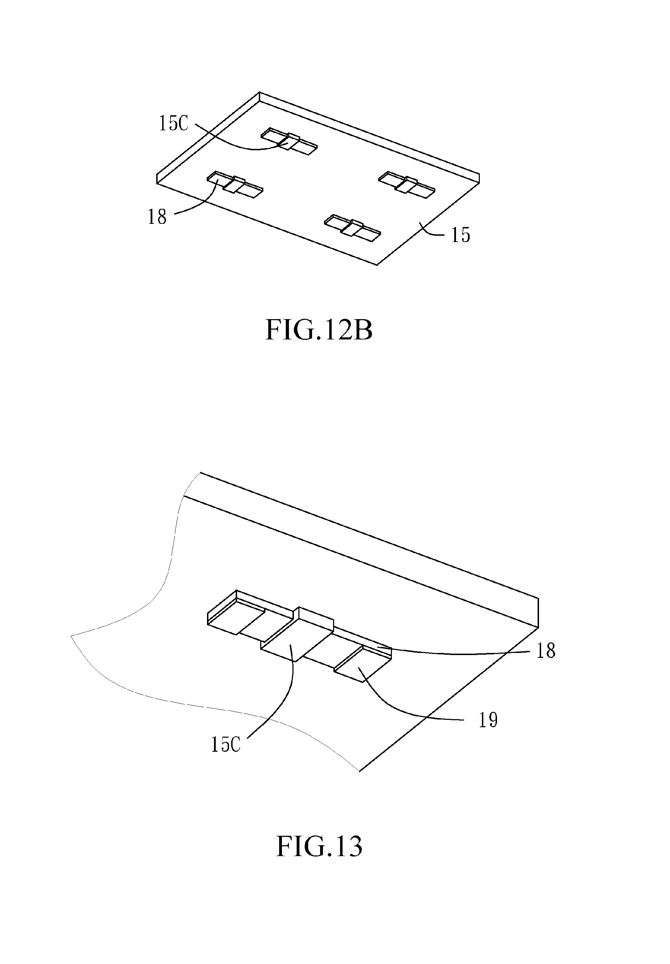

FIG. 12A shows a partial perspective top view of the frame 15 and FIG. 12B shows a partial perspective bottom view of the frame 15. The frame 15 of the embodiment may further include a holding groove 15C, arranged in the extended portion 15B, for inlaying the third actuator 18. Moreover, the frame 15 may further include a resistance member 15D disposed above the holding groove 15C. The resistance member 15D may be used to transfer the acoustic energy generated by the third actuator 18 to the vibration plate 12, and also provide a vibration space.

With respect to the third actuator 18 of the fourth embodiment (FIG. 10A/B) or the fifth embodiment (FIG. 12A/B), inertial mass 19 may be selectively arranged on the bottom surface, the top surface, the side surface, or other locations near the swinging end of the third actuator 18 to enhance haptic feedback as illustrated in a perspective bottom view of FIG. 13.

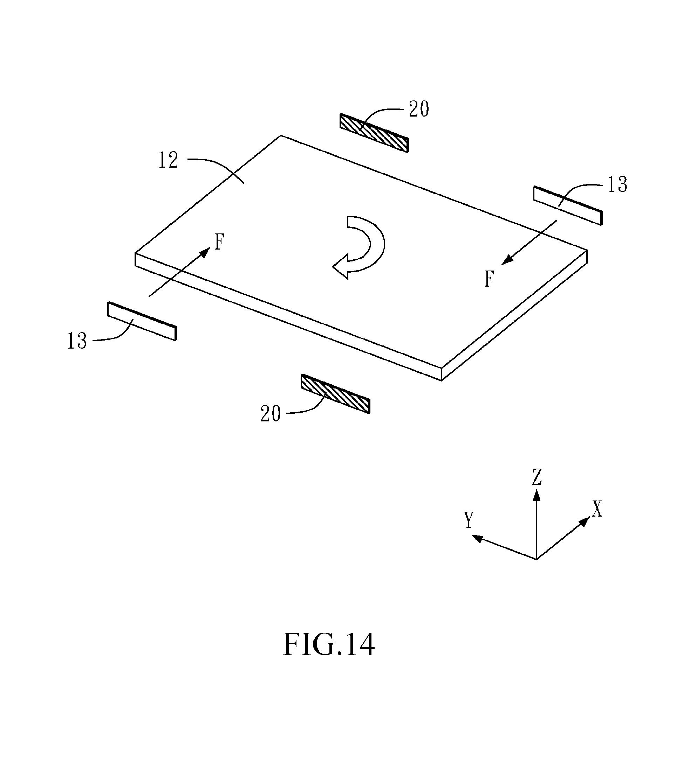

FIG. 14 shows an exploded view of components of a haptic feedback module according to a sixth embodiment of the present invention, which is a modified embodiment of the fist embedment. In the embodiment, the first actuator 13 is disposed at one end of a lateral surface (e.g., direction Y) of the circumference of the vibration plate 12, and an elastic damper 20 is disposed at the other end of the lateral surface. The first actuator 13 and the elastic damper 20 are also similarly disposed on an opposite lateral surface. The first actuators 13 and the elastic dampers 20 are arranged in a manner that the first actuator 13 on one lateral surface oppositely faces the elastic damper 20 on an opposite lateral surface, and each first actuator 13 is disposed near a corner of the vibration plate 12. The elastic damper 20 may be used to hold the vibration plate 12, and provide vibration space for the vibration plate 12. The elastic damper 20 may be made of, but is not limited to, silicon-containing compound such as silicon gel or silicon rubber. When the two first actuators 13 are driven, inertial forces along the positive X direction and the negative X direction are generated as indicated by arrow or F. The inertial forces press the elastic dampers 20, thereby resulting in shift along the positive X direction and the negative Y direction. As a result, the vibration plate 12 rotates around the direction Z.

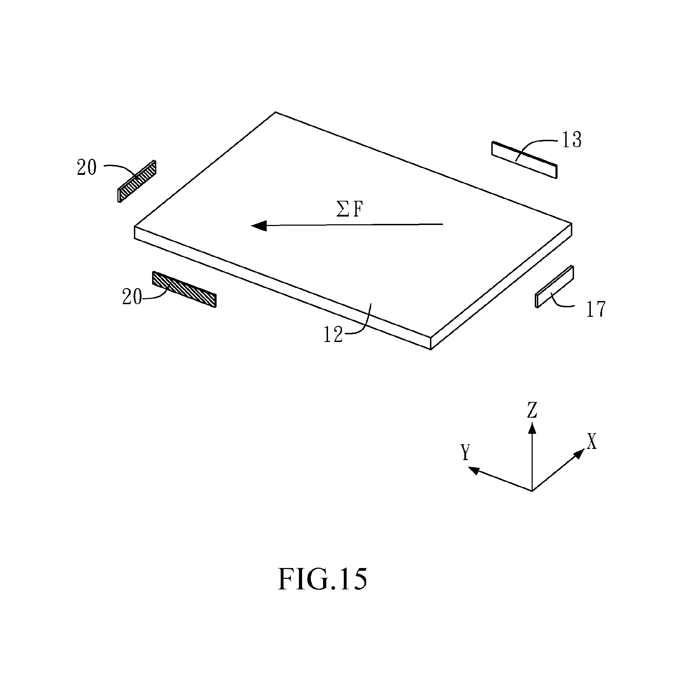

FIG. 15 shows an exploded view of components of a haptic feedback module according to a seventh embodiment of the present invention, which is a modified embodiment of the second embedment. In the embodiment, the first actuator 13 is disposed at one end of a lateral surface of the circumference of the vibration plate 12, and the second actuator 17 is disposed at a neighboring end of a longitudinal surface. Moreover, the elastic dampers 20 are disposed at two neighboring ends of an opposite lateral surface and longitudinal surface. The elastic damper 20 may be used to hold the vibration plate 12, and provide vibration space for the vibration plate 12. When the first actuator 13 and the second actuator 17 are driven, inertial forces along the negative X direction and the positive Y direction are generated, therefore forming a resultant force as indicated by arrow. The resultant force points to the elastic dampers 20, thereby slantingly shifting the vibration plate 12.

The elastic dampers 20 may be adapted to the haptic feedback module of the first embodiment as exemplified in the sixth embodiment, and the elastic dampers 20 may be adapted to the haptic feedback module of the second embodiment as exemplified in the seventh embodiment. However, the elastic dampers 20 may be adapted to the haptic feedback module of other embodiments such as the third embodiment and the fifth embodiment.

Although specific embodiments have been illustrated and described, it will be appreciated by those skilled in the art that various modifications may be made without departing from the scope of the present invention, which is intended to be limited solely by the appended claims.

## Claims

1. A haptic feedback module, comprising:
a vibration plate contacting with a top plate member; and
at least one first actuator disposed along a lateral surface of circumference of the vibration plate;
wherein vibration energy of the vibration plate is transferred to the top plate member when the first actuator presses the vibration plate, thereby resulting in haptic feedback.

2. The haptic feedback module of claim 1, further comprising at least one second actuator disposed along a longitudinal surface of the circumference of the vibration plate.

3. The haptic feedback module of claim 1, further comprising at least one third actuator disposed below a bottom surface of the vibration plate.

4. The haptic feedback module of claim 3, further comprising at least one inertial mass disposed on a bottom surface, a top surface, or a side surface of the third actuator.

5. The haptic feedback modulator of claim 1, 2 or 3, wherein the first actuator, the second actuator or the third actuator is coupled to the vibration plate by contacting, binding, inlaying, embedding, screwing or integrating.

6. The haptic feedback modulator of claim 1, 2 or 3, further comprising a carrier for supporting the vibration plate, wherein the carrier includes a base and a side fixing member perpendicularly extended from the base.

7. The haptic feedback module of claim 6, wherein the first actuator, the second actuator or the third actuator is coupled to the carrier by contacting, binding, inlaying, embedding, screwing or integrating.

8. The haptic feedback module of claim 6, wherein the carrier has an opening.

9. The haptic feedback module of claim 6, wherein the carrier has a groove for inlaying the first actuator, the second actuator or the third actuator.

10. The haptic feedback modulator of claim 6, wherein the carrier further comprises a clamping member.

11. The haptic feedback module of claim 1, 2 or 3, further comprising a frame for placing the vibration plate, wherein the frame includes an outer frame, and an extended portion that is extended from a bottom of the outer frame.

12. The haptic feedback module of claim 11, wherein the first actuator, the second actuator or the third actuator is coupled to the frame by contacting, binding, inlaying, embedding, screwing or integrating.

13. The haptic feedback module of claim 11, further comprising a holding groove arranged in the extended portion of the frame.

14. The haptic feedback module of claim 13, further comprising a resistance member disposed above the holding groove.

15. The haptic feedback module of claim 1, further comprising at least one elastic damper disposed along the lateral surface, a longitudinal surface or a bottom surface of the vibration plate.

16. The haptic feedback module of claim 15, wherein the elastic damper comprises silicon-containing compound.
